Europäisches Patentamt

European Patent Office

Office européen des brevets

(11) Numéro de publication: **0 234 150**
**A1**

## (12) DEMANDE DE BREVET EUROPEEN

(21) Numéro de dépôt: **86402768.5**

(22) Date de dépôt: **11.12.86**

(51) Int. Cl.⁴: **G01T 1/14** , G01T 7/06

(30) Priorité: **06.01.86 FR 8600081**

(43) Date de publication de la demande:
**02.09.87 Bulletin  87/36**

(84) Etats contractants désignés:
**AT BE CH DE ES GB IT LI LU NL SE**

(71) Demandeur: **Gonthier, Bruno**
**Parc de Monteillon 11, rue du Dr. Roomefort**
**F-33160 Saint Médard en Jalles(FR)**

(72) Inventeur: **Gonthier, Bruno**
**Parc de Monteillon 11, rue du Dr. Roomefort**
**F-33160 Saint Médard en Jalles(FR)**

(74) Mandataire: **Marquer, Francis et al**
**Cabinet Moutard 35, Avenue Victor Hugo**
**F-78960 Voisins le Bretonneux(FR)**

(54) **Procédé de mesure de contamination et d'irradiation et capteur universel pour la mise en ouvre dudit procédé.**

(57) Le capteur individuel portatif selon l'invention comprend un électret (11) dont une première face est au moins partiellement au contact du fluide que l'on désire surveiller et des électrodes (E1-E5) disposées en regard de la deuxième face. Un circuit électronique (D1-D5, 14) effectue la mesure de la variation de champ de l'électret (11) dans la zone en regard desdites électrodes (E1-E5). Un circuit aérolique (19-26) assure une circulation de fluide à débit constant sur l'électret (11).

L'invention permet notamment la détection sélective, au temps réel des contaminations $\alpha$ et $\beta$, des neutrons, de l'irradiation $\gamma$ ainsi que les gaz radioactifs tels que le krypton ou le xenon.

EP 0 234 150 A1

## PROCEDE DE MESURE DE CONTAMINATION ET D'IRRADIATION ET CAPTEUR UNIVERSEL POUR LA MISE EN OEUVRE DUDIT PROCEDE.

La présente invention concerne un procédé de mesure de contamination et d'irradiation ainsi qu'un capteur pour la mise en oeuvre dudid procédé.

Elle a plus particulièrement pour but, mais non exclusivement, la réalisation d'un capteur universel du type susdit pouvant être réalisé sous une forme suffisamment miniaturisée pour permettre une détection individuelle, par exemple à l'usage d'un personnel travaillant dans un environnement radioactif, et qui court par conséquent des risques d'irradiation directe ou indirecte par des rayonnements ionisants, et/ou de contamination par des substances radioactives en suspension.

On constate qu'à l'heure actuelle, il n'existe pas de capteur individuel portatif qui puisse à la vois effectuer en temps réel des mesures d'irradiation ou de contamination atmosphérique.

En effet, si les mesures d'irradiation peuvent être effectuées par des appareils individuels portatifs tels que, par exemple, des stylodosimètres, les mesures de contamination atmosphérique font par contre intervenir des installations relativement complexes et coûteuses comportant nécessairement :

-des dispositifs de prélèvement d'air des locaux contrôlés, munis de liaisons aérauliques qui conduisent, grâce à une dépression engendrée par une turbine, les flux d'air prélevés, sur un filtre destiné à retenir les matières en suspension ;

-un détecteur disposé à proximité immédiate du filtre et conçu pour effectuer la mesure de l'activité des matières radioactives retenues par le filtre ;

-un dispositif pour le traitement des signaux délivrés notamment en vue d'obtenir une grandeur représentative de l'activité volumique de local ;

-des moyens permettant d'isoler l'ensemble de détection (filtre/détecteur) de la radioactivité venant de l'extérieur, ces moyens se présentant habituellement sous la forme d'enceintes en plomb relativement lourdes et volumineuses, de compteurs de garde, etc... ; et

-un dispositif permettant de changer périodiquement les filtres.

Il s'avère en pratique que ces installations présentent un certain nombre d'in.. nvénients.

Tout d'abord, la mesure effectuée par ces installations n'est pas véritablement représentative de la nuisance au niveau de l'individu, notamment du fait qu'habituellement l'atmosphère qui règne dans la pièce n'est pas homogène et que l'individu peut se déplacer alors que le point de prélèvement reste fixe. Ce problème est considérablement accru lorsque la pièce est équipée d'un système de ventilation.

Un autre inconvénient de ces installations consiste en ce qu'elles font nécessairement intervenir un dispositif d'entraînement dynamique de l'air avec un système complexe de régulation pour obtenir un débit constant. En raison du fait que le flux d'air entraîné doit passer au travers du filtre, il convient donc d'utiliser une pompe ou une turbine relativement puissante et, par conséquent, coûteuse et encombrante.

A cet inconvénient se rajoute le fait que le filtre se colmate progressivement en induisant une perte de charge variable que le système de régulation devra compenser pour maintenir le débit constant et éviter une dégradation de la mesure.

En outre, les installations actuellement utilisées sont sujettes au problème de la contamination du détecteur, dû à la présence de celui-ci en regard du filtre. A l'heure actuelle, ce problème ne peut être résolu qu'en changeant régulièrement le détecteur, la décontamination de ce dernier étant une opération délicate.

En conclusion, ces installations sont coûteuses à l'achat et en entretien, elles sont lourdes donc peu maniables et ne peuvent pas être multipliées aisément. Par ailleurs, elles ne sont pas rigoureusement fiables pour la protection du personnel pour les raisons précédemment indiquées. En outre, elles sont relativement complexes puisqu'elles exigent une chaîne de détection différente par type de rayonnement et, en particulier pour la détection de la contamination $\alpha$, de la contamination $\beta$, pouer l'irradiation par des neutrons, l'irradiation $\gamma$ et pour la détection des gaz radioactifs tels que le krypton ou le xenon.

L'invention a donc pour but de supprimer tous ces inconvénients. Elle propose donc à cet effet un procédé mis en oeuvre par un capteur universel relativement simple, peu coûteux, utilisable individuellement et qui est susceptible d'effectuer simulanément les différents types de détection précédemment mentionnés.

Pour parvenir à ce résultat, l'invention combine d'une façon nouvelle et originale deux propriétés bien distinctes des électrets (c'est-à-dire d'une feuille diélectrique électriquement chargée au voisinage d'au moins l'une de ses faces) à savoir, la variation de la charge électrique de l'électret notamment sous l'effet d'un rayonnement ionisant, et les propriétés mécaniques du champ électrostatique produit par l'électret.

Ainsi, d'une façon plus précise, le procédé pour la mesure de la contamination produite par des matières radioactives en suspension dans un fluide consiste selon l'invention, d'une part, à piéger les aérosols contenus dans le fluide grâce au champ électrostatique produit par l'électret, de manière à ce que la fraction radioactive de ces aérosols crée des paires d'ions dans ledit fluide qui seront à leur tour piégées par ledit champ, ce piégeage entraînant alors une décharge de l'électret en fonction du nombre d'ions collectés et, d'autre part, à effectuer, en temps réel, la mesure de ladite décharge à l'aide d'un dispositif de mesure approprié.

Tel que précédemment défini, ce procédé permet donc d'effectuer des mesures de contamination par des matières en suspension (aérosol) étant entendu que le taux de piégeage peut être relié par une relation mathématique simple à la concentration initiale du fluide en aérosols radioactifs.

Toutefois, le procédé selon l'invention ne se limite pas à ce seul type de mesure, mais permet en outre d'effectuer simultanément de nombreuses autres mesures et, tout d'abord, la mesure de la contamination par un gaz radioactif tel que le krypton ou le xénon.

A cet effet, elle part de la constatation que dans le cas où la couche de fluide passant au voisinage de la face "sensible" de l'électret est en mouvement selon une direction prédéterminée, le piégeage des matières radioactives en suspension s'effectue dans une zone de l'électret par rapport au sens de déplacement du fluide, tandis qu'en aval de cette zone l'électret ne sera pas influencé par ces matières.

Ainsi, lorsque le fluide en déplacement contient un gaz radioactif, le rayonnement ionisant qu'il émet produira dans la zone amont de l'électret une action s'ajoutant à celle des matières piégées, tandis que dans la zone aval son action sera indépendante de celle desdites matières. Ainsi, en détecant les variations de charge électrique dans ces deux zones, il devient possible de détecter sélectivement la radioactivité des matières en suspension et celle du gaz. De même, dans le cas où seul un gaz radioactif est présent dans la couche d'air, les deux variations de charge détectées devront être identiques de sorte que lorsque l'égalité de ces deux variations est détecté ceci signifie que l'on est uniquement en présence d'un gaz radioactif sans contamination par aérosols radioactifs.

Le procédé selon l'invention permet également d'effectuer la détection du rayonnement γ et, plus particulièrement, les dommages effectués par ce rayonnement au niveau des tissus vivants de l'oranisme.

Selon l'invention, cette détection s'effectue dans une zone de l'électret isolée du courant de fluide passant sur l'électret en vue des détections précédemment évoquées de sorte que la charge électrique de cette zone de l'électret ne sera pas influencée par le gaz et par les matières radioactives en suspension dans ce gaz. Devant cette zone, il convient alors de prévoir un élément produisant une ionisation similaire à celle qui est effectuée dans la peau. Cette détection γ permettra en outre d'effectuer une compensation des mesures effectuées sur les autres zones de l'électret - (les rayons γ provoquant une décharge homogène de l'ensemble de l'électret).

Le procédé selon l'invention peut en outre permettre la détection des neutrons. On sait en effet que les neutrons ne sont pas véritablement similaires aux rayonnements $\alpha$, $\beta$, $\gamma$ précédemment mentionnés dans ce sens qu'ils ne sont pas directement ionisants. Par contre, il est possible de les fair réagir sur un matériau tel que du bore qui va s'activer sous l'effet des neutrons, créant ainsi des atomes émetteurs de rayonnements $\alpha$. En outre, il est nécessaire de ralentir préalablement ces neutrons en leur faisant traverser une pièce en matériau hydrogéné telle que, par exemple, une boule en polyéthylène convenablement placée.

En conséquence, pour effectuer une détection neutronique, le procédé selon l'invention pourra comprendre la détection des variations des charges électriques de l'électret dans une zone distincte des zones précédemment mentionnées et isolée de celles-ci, cette zone étant associée à un élément apte à émettre un rayonnement ionisant sous l'effet des neutrons et à un élément en un matériau approprié pour ralentir les neutrons.

Bien entendu, pour les raisons précédemment mentionnées, l'électret sera soumis localement à des décharges qui à la longue de rendront inopérant. L'invention prévoit donc la détection de la décharge de l'électret simplement par comparaison des décharges partielles détectées dans les différentes zones de l'électet, en particulier dans les susdites zones amont et aval et dans une zone intermédiaire comprise entre ces deux zones.

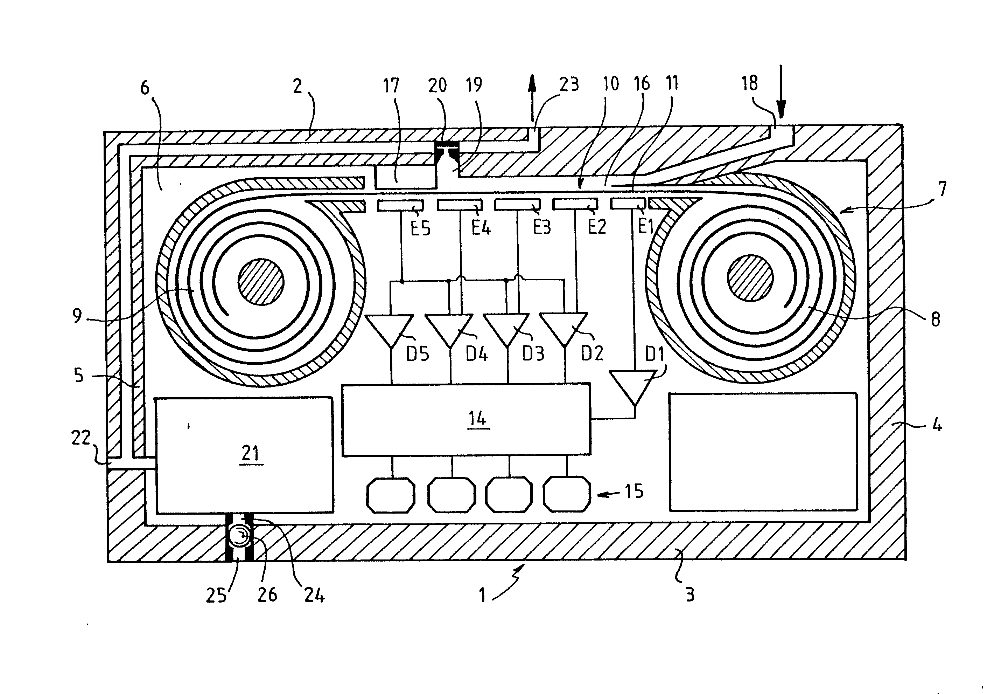

L'invention concerne également les dispositifs pour la mise en oeuvre du procédé précédemment décrit dont un mode d'exécution sera décrit ci-après, à titre d'exemple non limitatif, avec référence au dessin annexé dans lequel :

La figure unique est une coupe schématique d'un capteur universel portatif apte à effectuer des mesures d'irradiation et de contamination atmosphérique.

Tel que représenté sur ce dessin, le capteur est logé dans un boîtier 1 de petites dimensions, de l'ordre d'un paquet de cigarettes. Dans cet exemple, ce boîtier 1 présente une forme parallélépipédique et comprend une face supérieure 2, une face inférieure 3, deux côtés longitudinaux parallèles au plan de la figure et deux côtés transversaux parallèles 4, 5. Bien entendu, l'invention ne se limite pas à cette form de boîtier. Il est évident que ce boîtier pourrait présenter une multiplicité d'autres formes sans que ceci modifie le principe de l'invention.

Avantageusement, ce boîtier 1 peut présenter une structure mécanique comparable à celle d'un appareil de photographie miniature et comprendre un couvercle basculant ou amovible donnant accès à un logement servant à recevoir une cartouche ou cassette 7 similaire à celle d'une cartouche ou cassette de pellicules photo munie d'une bobine débitrice 8 et d'une bobine réceptrice d'électret 9, ces deux bobines étant séparées par une plage d'exposition 10 où l'électret 11 se trouve au moins latéralement guidé de manière à présenter à cet endroit une face plane (sensiblement parallèle à la face supérieure 2). D'une façon analogue à celle d'un appareil de photo, ce boîtier peut être en outre équipé d'un mécanisme d'avancement de l'électret 11.

L'électret 11 se présente donc sous la forme d'une bande souple en matière diélectrique, convenablement chargée au niveau de ses deux faces - (charges + et -) et pouvant s'enrouler sur la bobine débitrice 8 et/ou la bobine réceptrice 9. Il présente de préférence sur l'une de ses faces (sa face qui est oppose à la face supérieure 2 du boîtier 1 dans la plage d'exposition 10), des métallisations (non figurées) correspondant aux différentes zones de détection.

Dans cet exemple, la détection des variations des charges électriques de l'électret dans la plage d'exposition 10 s'effectue au moyen de cinq électrodes E1 à E5 qui définissent sur l'électret cinq bandes de détections successives entre la bobine débitrice 8 et la bobine réceptrice 9. Ces bandes de détection s'étendent d'un bord à l'autre de l'électret 11 parallèlement aux axes de rotation des bobines 8, 9.

Chacune de ces électrodes E1 à E5 est reliée à un détecteur de courant D1 à D5 schématisé par un amplificateur opérationnnel qui transmet des informations représentatives des variations du champ électrostatique détecté dans la zone correspondante, à un microprocesseur 14 destiné à effectuer un traitement des informations délivrées par les détecteurs D1 à D5 et à permettre un affichage sélectif des mesures d'irradiation et de contamination effectuées. Ce microprocesseur 14 peut en outre être conçu de manière à émettre un signal d'alarme lorsque le résultat de ces mesures dépasse un seuil prédéterminé. De même, un signal d'alarme peut être prévu pour indiquer que la partie de l'électret 11 se trouvant dans la plage d'exposition 10 est déchargée. Les circuits d'affichage et d'alarme qui sont à la portée de l'homme de l'art n'ont pas été détaillés pour plus de clarté, mais sont schématisés par les symboles 15.

Par ailleurs, le dispositif décrit dans cet exemple comprend un circuit aérolique permettant d'assurer une circulation d'air sur une partie de la portion d'électret 11 se trouvant dans la plage d'exposition 10, notamment dans les zones où s'effectue la détection de la contamination (gaz + aérosol).

Ce circuit aérolique fait plus particulièrement intervenir un circuit de circulation d'air sur la plage d'exposition de l'électret, ce circuit de circulation comprenant une chambre de circulation d'air 16 comprise entre la plage d'exposition 10 et la face supérieure 2 du boîtier 1, cette chambre s'étendant depuis une première zone de détection de la plage d'exposition 10 de l'électret 11 adjacente à la bobine débitrice et au droit de l'électrode E1 mais qui n'est pas en contact avec le flux d'air passant dans ladite chambre 16, jusqu'à une deuxième zone de détection (électrode E5) de la plage d'exposition 10 de l'électret 11 adjacente à la bobine réceptrice 9 et qui se trouve elle aussi isolée du flux d'air grâce à une pièce 17 en un matériau apte à créer, sous l'action des rayons γ, une ionisation similaire à celle qui est effectuée dans la peau d'un individu.

L'extrémité de la chambre de circulation située de côté de la bobine débitrice communique à l'extérieur par un orifice d'accès 18, tandis que l'extrémité située du côté de la bobine réceptrice est raccordée à l'orifice d'aspiration 19 d'un venturi 20 monté dans un circuit pneumatique, comprenant un réservoir de gaz sous pression 21 logé à l'intérieur du boîtier 1, un conduit de circulation de gaz sous pression de ce réservoir 21, équipé d'un dispositif de réglage de débit (pointeau 22), et raccordé à l'entrée du venturi 20. Un conduit d'échappement 23 débouchant à l'extérieur est prévu pour refouler à l'extérieur le mélange de gaz délivré par le réservoir 21 et d'air aspiré dans la chambre de circulation 16 par le venturi 20.

Le réservoir comprend par ailleurs un orifice de remplissage 24 connecté à un conduit de recharge 25 débouchant à l'extérieur et muni d'un clapet anti-retour 26. Bien entendu, l'invention ne se limite pas à ce principe de circulation, celle-ci pouvent être réalisé, par exemple par une micro turbine disposée en série dans le circuit pneumatique.

Comme précédemment mentionné, le capteur comprend cinq électrodes de mesure dont deux E1, E5 sont affectées à deux zones de détection isolée du flux d'air et dont les trois autres E2, E3, E4 se succèdent au droit de la chambre de d'exposition 10.

Le fonctionnement du capteur précédemment décrit est alors le suivant :

Initialement, on charge le capteur avec une cartouche 7 ou une cassette d'électret vierge et chargée. Parallèlement, on remplit le réservoir de gaz sous pression 21. On arme ensuite le capteur d'une façon analogue à celle d'un appareil de photographie en amenant une première plage d'exposition 10 de l'électret 11 entre la bobine débitrice 8 et la bobine réceptrice 9, au droit des électrodes de mesure E1 à E5.

Sous l'effet du gaz circulant dans le venturi, l'air présent dans la chambre de circulation 16 se trouve aspiré et il se crée dans cette chambre 16 une circulation d'air à débit sensiblement constant passant successivement sur les plages de détection de l'électret 11 situées au droit des électrodes E2, E3, E4.

En raison du champ électrostatique de l'électret, les matières en suspension ionisées contenues dans le flux d'air qui rentre dans la chambre de circulation 16 sont attirées et piégées essentiellement dans la zone de détection située au droit de l'électrode E2. En conséquence, le rayonnement émis par ces matières provoquera la création de paires d'ions qui seront à leur tour piégées par le champ électrostatique. Ces ions provoqueront alors une décharge progressive de l'électret dans cette zone en fonction du nombre d'ions collectés. L'analyse par le microprocesseur du signal représentatif de cette décharge produite à la sortie du détecteur permet ensuite d'obtenir la valeur de la contamination détectée. Cette valeur pourra être affichée ou même servir à déclencher un signal d'alarme dans le cas où elle dépasse une valeur prédéterminée.

Parallèlement, un circuit comprenant l'électrode E1 et le détecteur de champ électrique D1 permettra d'obtenir un signal représentatif du champ électrostatique initial de l'électret alors de la mise en place d'une nouvelle zone d'exposition 10. Ce signal permettra donc d'effectuer une première correction des mesures et/ou d'être informé sur le niveau de charge de l'électret. En effet, la charge de l'électret contenue dans la bobine débitrice 8 n'est pas rigoureusement constante dans le temps. Elle est en particulier sujette à des variations engendrées notamment par des irradiations externes. Ces variations pourront être limitées en protégeant la bobine débitrice par une enveloppe en plomb - (étant entendu que dans le cas de capteurs individuels portatifs, cette protection demeurera insuffisante pour supprimer totalement ce problème).

Dans le cas où la plage de détection de l'électret est soumise à l'action de gaz radioactifs, il s'ensuit une décharge homogène de toute la plage de détection de l'électret. Cette décharge pourra être mesurée par l'électrode E4 du fait que la zone de détection de l'électret correspondant à cette électrode n'est pas influencée par la contamination (les particules radioactives en suspension étant piégées au niveau de l'électrode E2). Par contre, au niveau de cette électrode E2, la variation de charge détectée sera représentative de l'effet cumulé des gaz radioactifs et de la contamination. La valeur de la contamination sera alors obtenue en retranchant de la mesure obtenue par l'électrode E2 la mesure effectuée par l'électrode E4.

Comme précédemment mentionné, l'électrode E5 associée à l'élément 17 sert à effectuer la mesure de l'irradiation $\gamma$ sous équivalent tissu. Il est clair que cette mesure pourra également servir pour effectuer une compensation des mesures effectuées sur les autres électrodes et, en particulier celle effectuée par l'électrode E4. Il devient donc possible d'effectuer une mesure sélective de l'irradiation.

Dans l'exemple représenté, le capteur comprend en outre une électrode supplémentaire E3 située entre l'électrode E2 et l'électrode E4, et couvrant une zone intermédiaire de la plage d'exposition 10 de l'électret 11.

Initialement, lorsque la charge de l'électret dans la plage d'exposition 10 est à son niveau maximum, cette zone intermédiaire ne sera que très faiblement influencée par la contamination de l'air, du fait que les matières en suspension ionisées se trouveront déjà piégées au niveau de l'électrode E2.

Néanmoins, la mesure de contamination effectuée sur cette électrode E3 pourra être rajoutée à la mesure effectuée sur l'électrode E2.

Par contre, à la longue, en raison de l'affaiblissement du champ électrostatique, le taux de piégeage assuré au niveau de l'électrode E2 va progressivement s'abaisser tandis que celui de la zone intermédiaire (électrode E3) s'accroît.

Lorsque la variation de charge détectée sur l'électrode E3 deviendra égale à celle détectée sur l'électrode E2 tout en restant supérieure à la variation de charge détectée sur l'électrode E4, on considèrera que la plage de détection de l'électret correspondant à l'électrode E2 est déchargée et, qu'en conséquence, il devient nécessaire d'effectuer une avance de l'électret en vue d'utiliser une nouvelle plage de détection. Ainsi, le microprocesseur pourra avantageusement comprendre une logique basée sur cette constatation, pour déclencher un signal indiquant que la plage de détection de l'électret actuellement utilisée est déchargée.

Par ailleurs, la plage de détection de l'électret peut en outre comprendre une zone de détection des neutrons, associée à une électrode supplémentaire et à une pièce en matériau hydrogéné telle qu'une boule de polyéthylène servant à ralentir les neutrons.

Un avantage important du capteur précédemment décrit consiste en ce qu'il permet de s'affranchir d'une façon très simple des erreurs de mesure dues aux produits de filiation des isotopes du radon qui, comme on le sait, ne constituent pas un cause de contamination gênante.

Or, selon la technique usuelle, il est nécessaire, pour effectuer une discrimination des émissions dues au radon de celles dues aux aérosols recherchés, d'utiliser des détecteurs spectrométriques associés à des sélecteurs d'amplitude.

Toutefois, du fait que le spectre énergétique du rayonnement émis par le radon est très voisin de celui des émissions α du plutonium et que, selon la position du détecteur par rapport à la source d'emission, il se produit, dans les systèmes classiques, une superposition partielle des deux spectres, il convient alors d'utiliser des artifices par exemple grilles à ailettes, systèmes déprimogènes, etc... pour obtenir un résultat satisfaisant. Il est clair que cette disposition accroît la complexité et, par conséquent, le coût de l'installation.

Par contre, dans le capteur selon l'invention, les aérosols se trouvent directement piégés sur le détecteur (l'électret ayant la double fonction de piégeage et de détecteur), de sorte que les radiations émises par le radon demeurent dans la bande d'énergie qui leur est propre sans empiéter dans la band d'énergie des radiations α. Une analyse spectrale simple permet donc de distinguer ces deux types de radiation.

Bien entendu, l'invention ne se limite pas à la structure du détecteur précédemment décrit et de nombreuses variantes évidentes pour un homme de l'art peuvent être envisagées.

Ainsi, par exemple, il serait possible de remplacer le système à cartouche ou à cassette d'électret par un système de type "à plaques", c'est-à-dire utilisant des électrets interchangeables présentant la dimension de la plage d'expo sition. Dans ce cas, un mécanism permettant le changement de l'électret une fois déchargé peutêtre prévu.

De même, l'électret pourrait être de forme circulaire, les électrodes étant alors conformées en anneaux concentriques ou sous la forme de secteurs annulaires. Dans ce dernier cas, le changement de plage d'exploitation pourrait s'effectuer par une rotation relative de l'électret et des électrodes de mesure.

## Revendications

1. Procédé de mesure de la contamination produite par des matières radioactives en suspension dans un fluide, caractérisé en ce qu'il consiste :

-à mettre au moins l'une des deux faces d'un électret (11) en contact avec le fluide que l'on veut mesurer de manière à ce que les matières radioactives en suspension soient attirées et piégées par le champ électrostatique produit par l'électret - (11) , les rayonnements émis par ces matières créant à leur tour des paires d'ions dans le fluide qui seront à leur tour piégées par ledit champ, et que ce piégeage entraîne une décharge progressive de l'électret fonction du nombre d'ions collectés, ladite décharge étant également en partie provoquée par l'interaction des rayonnements émis avec la matière de l'électret, et

-à mesurer cette décharge en vue d'en déduire un paramètre utile de ladite contamination, de sorte que l'électret joue à la fois de rôle de piège et de détecteur.

2. Procédé selon la revendication 1, caractérisé en ce que ledit paramètre utile est la concentration du fluide en aérosols radioactifs.

3. Procédé selon l'une des revendications 1 et 2, caractérisé en ce que l'on assure une circulation de fluide, de préférence à débit constant sur ladite face de l'électret (11).

4. Procédé selon l'une des revendications précédentes, caractérisé en ce que la circulation du fluide sur l'électret s'effectue dans au moins une direction et un sens déterminés et que l'on effectue dans deux zones distinctes de l'électret (11), deux mesures de variation de champ respectives, la mesure effectuée dans la zone située en aval par rapport audit sens servant à déterminer la radioactivité des gaz radioactifs contenus dans ledit fluide, tandis que celle effectuée dans la zone située en amont servira conjointement avec le précédente à mesurer la contamination provoquée par des substances radioactives en suspension.

5. Procédé selon l'une des revendications précédentes, caractérisé en ce qu'en vue de la détermination de la radioactivité γ, il comprend en outre la détection de la variation du champ électrostatique de l'électret (11) dans une zone distincte qui n'est pas en contact avec le fluide, cette zone étant recouverte, du côté opposé à celui où s'effectue la détection, par un élément produisant sous l'effet des rayons γ une ionisation similaire à celle qui serait effectuée dans la peau d'un individu.

6. Procédé selon l'une des revendications précédentes, caractérisé en ce qu'il comprend la compensation des mesures de contamination par substances radioactives en suspension et par gaz radioactif, à l'aide du résultat de la susdite détermination de la radioactivité γ.

7. Procédé selon l'une des revendications précédentes,
caractérisé en ce qu'on vue de la détermination des neutrons, il comprend en outre la détection de la variation du champ électrostatique de l'électret - (11) dans une zone distincte qui n'est pas en contact avec le fluide, cette zone étant recouverte au moins du côté opposé à celui où s'effectue la détection, par matériau d'activation tel que par exemple du bore et par un élément en matière hydrogénée apte à ralentir les neutrons.

8. Procédé selon l'une des revendications précédentes,
caractérisé en ce qu'il comprend la détection des variations du champ électrostatique de l'électret - (11) dans une zone intermédiaire comprise entre la susdite zone amont et la susdite zone aval, et la détermination de la décharge de l'électret par comparaison des variations de champ dans lesdites zones.

9. Capteur pour la mise en oeuvre de procédé selon l'une des revendications précédentes,
caractérisé en ce qu'il comprend un électret (11) dont une première face est au moins partiellement au contact du fluide que l'on désire surveiller et au moins une électrode (E1-E5) disposée en regard de la deuxième face, et un circuit électronique (D1-D5, 14) apte à mesurer la variation du champ de l'électret (11) dans sa zone en regard de ladite électrode (E1-E5).

10. Capteur selon la revendication 9,
caractérisé en ce qu'il comprend un circuit aérolique (19, 26) apte à assurer une circulation de fluide de préférence à débit constant sur ladite première face.

11. Capteur selon la revendication 9,
caractérisé en ce qu'il comprend deux électrodes - (E2, E4) disposées en regard de deux zones successives de l'électret (11), à savoir : une zone amont et une zone aval, compte tenu du sens d'écoulement du fluide, ces deux électrodes (E2, E4) étant respectivement connectées à deux circuits de mesure de variation de champ (D2, D4), l'électrode (E4) affectée à la zone aval servant à la détection de l'activité des gaz radioactifs contenus dans ledit fluide et un circuit de traitement (14) apte à déterminer la contamination par matières radioactives en suspension dans ledit fluide d'après les informations délivrées par les deux circuits de détection.

12. Capteur selon l'une des revendications précédentes,
caractérisé en ce qu'il comprend en outre des moyens pour isoler dudit fluide une zone de l'électret (11), un élément (17) servant d'équivalent tissu pour les rayons γ qui recouvre d'un côté ladite zone et une électrode (E5) connectée à un circuit de mesure de variation du champ électrostatique (D5) qui détermine un paramètre représentatif du rayonnement γ et de sa nuisance sur un tissu vivant.

13. Capteur selon l'une des revendications précédentes,
caractérisé en ce qu'il comprend un circuit (14) apte à effectuer une compensation des mesures effectuées sur les électrodes (E2-E4) servant à déterminer la contamination, à partir du susdit paramètre représentatif du rayonnement γ.

14. Capteur selon l'une des revendications précédentes,
caractérisé en ce qu'il comprend en outre une électrode (E3) placée en regard d'une zone intermédiaire comprise entre les susdites électrodes amont et aval (E2, E4), cette électrode étant connectée à un circuit de mesure de variation de champ (D3), ainsi qu'un circuit logique (14) apte à détecter la décharge de l'électret (11) d'après les variations de champ détectées dans les susdites zones amont, aval et intermédiaire.

15. Capteur selon l'une des revendications précédentes,
caractérisé en ce qu'il comprend en outre des moyens pour isoler dudit fluide une zone de l'électret, un matériau d'activation (de type bore) recouvrant d'un côté ladite zone, un élément en matière hydrogénée, pour ralentir les neutrons, et une électrode connectée à un circuit de mesure de variation de champ.

16. Capteur selon l'une des revendications précédentes,
caractérisé en ce que l'électret (11) se présente sous la forme d'une bande et est monté dans une cartouche (7) comportant une bobine débitrice (8), une bobine réceptrice (9), ces deux bobines étant séparées par une lage d'exposition (10), et en ce qu'il présente sur l'une de ses faces des métallisations correspondant aux différentes zones de détection.

17. Capteur selon la revendication 16,
caractérisé en ce qu'il compend un boîtier comportant un couvercle amovible donnant accès à un logement apte à recevoir la susdite cartouche (7), en ce que les susdites électrodes (E1-E5) sont disposées en regard de l'une des faces de l'électret (11) dans le plage d'exposition, et en ce que le susdit circuit aérolique comprend une chambre de circulation de fluide (16) logée dans le boîtier et partiellement limitée d'un côté par la plage d'exposition de l'électret (11), cette chambre (16) débouchant à l'extérieur du côté de l'une des bobines et communiquant avec un conduit d'aspiration (19) situé du côté de l'autre bobine.

18. Capteur selon la revendication 17,
caractérisé en ce que le susdit conduit d'aspiration (19) est connecté à l'orifice d'aspiration d'un venturi (20) alimenté à l'aide d'un gaz sous pression provenant d'un réservoir (21) logé dans le boîtier et éventuellement rechargeable.

0 234 150

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | GB-A- 899 084 (MESSEN-JASCHIN) <br> * Page 1, lignes 29-64; page 2, lignes 5-14,27-45; figures * | 1-3,16 ,17 | G 01 T 1/14 <br> G 01 T 7/06 |
| A | IEEE TRANSACTIONS ON NUCLEAR SCIENCE, vol. NS-25, no. 5, octobre 1978, pages 1117-1120, IEEE, New York, US; D. PERINO et al.: "A new principle for radiation dosimetry and control" <br> * Page 1117, 'Summary'; page 1119, colonne 2, ligne 18 - page 1120, colonne 1, ligne 25; figure 5 * | 1-3 | |
| A | HEALTH PHYSICS, vol. 43, no. 5, novembre 1982, pages 731-733, Pergamon Press Ltd, Vermont, US; L.L. CAMPOS et al.: "A new electret dosimer for fast neutrons" <br> * En entier * | 1-3,7 15 | |

DOMAINES TECHNIQUES RECHERCHES (Int. Cl.4)

G 01 T

Le présent rapport de recherche a été établi pour toutes les revendications

| Lieu de la recherche | Date d'achèvement de la recherche | Examinateur |
|---|---|---|
| LA HAYE | 08-05-1987 | DATTA S. |